# EUROPÄISCHE PATENTANMELDUNG

(11) **EP 1 968 152 A1**
(43) Veröffentlichungstag der Anmeldung: **10.09.2008**
(21) Anmeldenummer: 08152052.0
(22) Anmeldetag: 28.02.2008
(51) Int. Cl.: H01M 10/48, H01M 10/42

(54) **Verfahren und Vorrichtung zur zerstörungsfreien Bestimmung eines im Inneren eines elektro-chemischen Energiespeichers ablaufenden zeitlichen Vorganges**

(30) Priorität: 28.02.2007 AT 3162007
(71) Anmelder: Wieger, Martin, 7041 Wulkaprodersdorf (AT)
(72) Erfinder: Wieger, Martin, 7041 Wulkaprodersdorf (AT)
(74) Vertreter: Weiss, Christian

(57) **Zusammenfassung**

In elektro-chemischen Energiespeichern, wie z.B. Blei-Säure-Akkumulatoren, bilden sich stark inhomogene Strukturen der elektrischen, chemischen und elektrochemischen Größen bzw. sonstiger physikalischer Größen aus. Für ein besseres Verständnis der Entstehung solcher Inhomogenitäten wäre ein technisches Verfahren, welches eine zerstörungsfreie Bestimmung der im Inneren des Energiespeichers zeitlich ablaufenden Prozesse zulässt, hilfreich. Die gegenständliche Erfindung gibt ein solches Verfahren und eine zugehörige Vorrichtung an. Dabei wird an zumindest einer Stelle des Energiespeicher (1) über einen bestimmten Zeitraum die Elektrolytdichte oder eine entsprechende Ersatzgröße in einer Reihe von übereinander liegenden Elektrolytschichten unter einem bestimmten Betriebsablauf des Energiespeichers (1) gemessen, die zeitliche und räumliche Verteilung der Messwerte aufgezeichnet und diese Verteilung hinsichtlich des ablaufenden zeitlichen Vorganges analysiert.

## Beschreibung

Die gegenständliche Erfindung betrifft ein Verfahren zur zerstörungsfreien Bestimmung eines im Inneren eines elektro-chemischen Energiespeichers mit sich verbrauchendem Elektrolyten ablaufenden zeitlichen Vorganges, sowie eine Vorrichtung zur Durchführung des Verfahrens.

In Abhängigkeit von elektrischen, chemischen und elektrochemischen Widerständen erfährt in Blei-Säure-Akkumulatoren die, über die Zuleitungen (Pole) angelegte Klemmenspannung, eine ungleichmäßige Verteilung über die gesamte Plattenoberfläche. Im Allgemeinen fällt die Spannung beim Laden des Akkumulators bei Entfernung vom elektrischen Zuleitungspol zunehmend ab, beim Entladen kehrt sich der Vorgang um, die Spannung ist im Inneren der Batterie höher und fällt zu den Polen hin ab.

Darüber hinaus bilden sich durch den Betrieb von elektro-chemischen Energiespeichern, wie z.B. Blei-Säure-Akkumulatoren, bedingt durch innere Prozesse, wie ablaufende Lade- und Entladevorgänge, bzw. durch von außen eingeprägte Vorgänge, im Inneren des Energiespeichers Zustände aus, die eine stark inhomogene Struktur der elektrischen (z.B. Potentialverteilung der spannungsbildenden EMK (= Elektromotorische Kraft), Stromverteilung, Innenwiderstand), chemischen (z.B. Säuredichte) und elektrochemischen Größen (z.B. Menge der umgesetzten Säure) bzw. sonstiger physikalischer Größen (z.B. Temperatur) hervorrufen. Zur Ausbildung dieser Zustände tragen einerseits Spezifika des Energiespeichers, wie z.B. Elektrolyt, Separatoren, aktive Masse (positive und negative Plattensätze), etc., als auch andererseits physikalische Kräfte und Mechanismen, wie z.B. Schwerkraft, Diffusions- und Migrationsmechanismen, etc., bei. Die Art des Betriebs des Energiespeichers am Einsatzort kann diese Inhomogenität verstärken oder abschwächen. Inhomogene Strukturen der prozessbeteiligten Elemente führen aber zudem zu ungleichmäßiger Ausnutzung und Verschleiß des Energiespeichers und sind daher unerwünscht und sollen nach Maßgabe vermieden werden.

Für ein besseres Verständnis der Entstehung solcher Inhomogenitäten wäre ein technisches Verfahren, welches eine zerstörungsfreie Bestimmung der im Inneren des Energiespeichers zeitlich ablaufenden Prozesse zulässt, besonders hilfreich. Die Verfahren entsprechend dem Stand der Technik, sind allerdings verhältnismäßig beschränkt, insbesondere gibt es derzeit keine praxistauglichen Verfahren, die Untersuchung dieser ablaufenden Vorgänge auf nicht zerstörende Weise vorzunehmen.

Bekannte Verfahren, bei denen der zu untersuchende Energiespeicher zerstört wird (sogenannte Öffnungsbefundungen), sind z.B.
- Sulfatbestimmungen / nasschemische Sulfatverteilungsanalysen,
- SEM (Scanning Electron Microscopy), ESEM (Environmental Scanning Electron Microscopy)
- Isotopen methoden (radioaktive Markierung),
- chemische Analysen (Flammenionisation, AAS - Atomabsorptionsspektroskopie, Massenspektroskopie, Gaschromatographie).

Gleichermaßen bekannt sind Verfahren zur Erfassung der lokalen Säuredichte in Blei-Säure-Akkumulatoren durch Messung mittels elektronischer oder optischer Säuredichtemesseinrichtungen. Durch die ausschließliche Bestimmung von Säuredichtewerten an diskreten Orten ist allerdings kein nachhaltig zufrieden stellender Rückschluss auf die relevanten Größen in einem Energiespeicher möglich. Bekannte Verfahren zur Messung der Elektrolytdichte sind z.B. der US 5 095 537 A, der DE 196 45 515 A1, der DE 198 19 013 A1 oder der DE 42 18 465 A1 zu entnehmen.

Bekannt sind weiters auch Verfahren, die zur Vorhersage von elektrischen Eigenschaften (z.B. der Ruhespannnung) eines elektrochemischen Energiespeichers dienen. So offenbart die DE 101 28 033 A1 ein Verfahren zur Vorhersage der äquilibrierten Ruhespannung eines elektrochemischen Energiespeichers, welche Aussagen über die Ruhespannungsbildung aber lediglich über verhältnismäßig kurze Zeiträume zulässt. Aus der DE 198 47 648 A1 ist ein Verfahren zur Bestimmung des Ladezustandes und der Hochstrombelastbarkeit von Batterien bekannt, wobei aus der Messung der Leerlaufspannung zu unterschiedlichen Zeitpunkten in stromlosen Situationen über einen zugeordneten Innenwiderstand auf die Hochstrombelastungseigenschaften (Starteigenschaften) der Batterie geschlossen wird. Die DE 103 35 930 A1 offenbart ein Verfahren zur Vorhersage von elektrischen Eigenschaften einer elektrochemischen Speicherbatterie, wobei die Verhaltensweisen von Batterien in Phasen unterteilt werden und daraus Rückschlüsse auf den Ladungszustand und daraus über bezogene Kenngrößen bzw. deren Veränderung Aussagen über das Bestehen vornehmlich reversibler Defekte (Schichtung) an Batterien gemacht werden. Die DE 32 16 412 A1 wiederum beschreibt ein Verfahren zur Ermittlung des Ladezustandes von elektrischen Akkumulatoren.

Ebenfalls bekannt sind Verfahren zur Erkennung der Elektrolytverteilung oder Säureschichtung in einem elektrochemischen Energiespeicher, wie z.B. aus der DE 103 16 638 A1, die ein Verfahren zur Erkennung von Säureschichtung in einer Batterie offenbart, wobei aber lediglich eine Abschätzung des Schichtungsgrades aus der Bestimmung und dem Vergleich unterschiedlicher Ladezustände getroffen wird.

Allen zuvor angeführten Verfahren ist gemeinsam, dass sie nur geringe, oder stark (auf einzelne Größen) eingeschränkte Möglichkeiten zur Bestimmung der Zeitverläufe batterietypischer Kenngrößen im Inneren des Energiespeichers aufweisen.

Zur Durchführung nicht zerstörender Untersuchungen bleibt zurzeit lediglich die approximierende Nachbildung der ablaufenden Prozesse durch Simulation, oder der Weg über die Ermittlung des räumlichen Potenzialverlaufs unter Verwendung von Referenzelektroden.

Eine weitere Möglichkeit zur nicht zerstörenden Bestimmung der fließenden Ströme wäre die Verwendung von Messwiderständen, die in die Gitter des Akkumulators eingearbeitet werden, was aber entsprechend aufwendig wäre.

Sämtlichen aufgezählten Verfahren ist gemeinsam, dass sie in der Praxis nur in sehr eingeschränktem Maße Informationen liefern, bzw. sind sie in ihrer Handhabung sehr aufwändig und kompliziert und damit für eine Anwendung zur Durchführung entsprechender Messreihen nicht geeignet.

Insbesondere für die Dimensionierung und Konstruktion von elektrochemischen Energiespeichern einerseits und andererseits für die Auslegung der Systeme, in denen die Energiespeicher betrieben werden, wäre aber ein einfaches Instrument zur nicht zerstörenden Bestimmung der tatsächlich ablaufenden Prozesse im Inneren der Batterie eine wertvolle Hilfe.

Es ist daher eine Aufgabe der gegenständlichen Erfindung, ein Verfahren und eine Anordnung zur Durchführung des Verfahrens anzugeben, mit dem die im Inneren eines elektro-chemischen Energiespeichers ablaufenden zeitlichen Vorgänge einfach und zuverlässig bestimmt werden können.

Diese Aufgabe wird erfindungsgemäß dadurch gelöst, indem an zumindest einer Stelle des Energiespeichers über einen bestimmten Zeitraum die Elektrolytdichte oder eine mit der Elektrolytdichte korrelierende Messgröße in einer Reihe von übereinander liegenden Elektrolytschichten unter einem bestimmten Betriebsablauf des Energiespeichers gemessen wird, die zeitliche und räumliche Verteilung der Messwerte aufgezeichnet wird und diese Verteilung hinsichtlich des ablaufenden zeitlichen Vorganges analysiert wird. Daraus leitet sich insbesondere die Möglichkeit ab, Energiespeicher in ihren grundlegenden elektrischen (z.B. Strom, Spannung, Ruhespannung, Innenwiderstand, etc.), chemischen (z.B. Säuredichte), elektrochemischen (z.B. Menge umgesetzte Säure) oder sonstigen physikalischen (z.B. Temperatur) Verhaltenseigenschaften festzulegen und zeitliche Betriebsabläufe zu definieren, welche z.B. Rückschlüsse auf den konstruktionstechnischen Aufbau des Energiespeichers zulässt bzw. dadurch beeinflusst werden können. Weiters lassen sich damit Energiespeicher beispielsweise in ihrem Verhalten unter typischen Einsatzbedingungen gleichermaßen abbilden, womit damit z.B. auch Alterungs- und Verschleißeffekte an Energiespeicher untersucht werden können, deren Ergebnisse letztendlich wieder in der Auslegung und Dimensionierung der Einsatzumgebung (z.B. in mobilen oder stationären Anwendungen) verwendet werden können.

Das Verfahren wird genauer, wenn die Messung der Elektrolytdichte oder einer entsprechenden Ersatzgröße in einer Reihe von übereinander liegenden Elektrolytschichten an mehreren Stellen des Energiespeichers durchgeführt werden, da dann mehr Messpunkte vorliegen.

Die Interpretation der zeitlichen und räumlichen Verteilung der Messwerte wird erleichtert, wenn aus der zeitlichen und räumlichen Verteilung der Messwerte, vorzugsweise unter Berücksichtigung grundlegender physikalischer Verhaltenseigenschaften der Batterie, wie z.B. elektrische, chemische, elektrochemische Verhaltenseigenschaften, ein Zusammenhang zwischen der gemessenen Elektrolytdichte und einer Kenngröße des Energiespeichers abgeleitet wird. Das erlaubt einen direkten Rückschluss von der Messgröße auf eine bestimmte Kenngröße des Energiespeichers.

Die Interpretation der zeitlichen und räumlichen Verteilung der Messwerte kann vorteilhaft auch dadurch erfolgen, dass durch die Auswahl spezieller Betriebsabläufe zumindest ein grundtypisches Schaubild der zeitlichen inneren Abläufe generiert wird. Anhand solcher Schaubilder können Rückschlusse auf die inneren Abläufe unter bestimmten Betriebsabläufen gemacht werden. Die Schaubilder werden dabei bevorzugt hinsichtlich des Verhaltens der elektrochemischen Größen des Energiespeichers interpretiert.

Wenn der Energiespeicher vor oder während der Messung einem von Innen oder von Außen wirkenden Einflussfaktor, vorzugsweise Ladevorgänge, Entladevorgänge, thermische Konditionierungen, mechanische Bewegungen, elektromagnetische Felder, ausgesetzt wird, können auch noch weitere Einflussfaktoren beim erfindungsgemäßen Verfahren berücksichtigt werden, womit die zu untersuchenden Vorgänge näher an die Realität rücken. Die unterschiedlichen Einflussfaktoren können in einer vorteilhaften Ausgestaltung in beliebiger Abfolge oder gleichzeitig in Kombination wirken.

Die Vorrichtung zur Durchführung des erfindungsgemäßen Verfahrens zeichnet sich dadurch die Merkmale des Anspruchs 8 aus. Mit der Anordnung solcher Messeinrichtungen bzw. solcher Messröhrchen kann die notwendige Messung auf sehr einfache Art und Weise und vor allem zerstörungsfrei durchgeführt werden.

Die gegenständliche Erfindung wird im Nachfolgenden anhand der schematischen, konkrete Ausführungsbeispiele beschreibenden Figuren 1 bis 3 beschrieben. Dabei zeigt
Fig. 1 und 2 eine Anordnung zur Durchführung des erfindungsgemäßen Verfahrens in zwei Ansichten und
Fig. 3 ein mit dem Verfahren gewonnener zeitlicher Verlauf einer Kenngröße des Energiespeichers.

Die im Inneren des elektrochemischen Energiespeichers mit sich verbrauchenden Elektrolyt ablaufenden Vorgänge werden im Betrieb des Energiespeichers vornehmlich durch die Einprägung von Spannungs- bzw. Stromprofilen von außen über die Klemmen bestimmt und bilden sich im Inneren der Batterie als dreidimensionales inhomogenes Verteilungsprofil der elektrischen, elektrochemischen, chemischen und physikalischen Größen, wie z.B. Spannungen, Spannungspotenziale, Einzelspannungen, Widerstände, Ströme, Säuredichte, Temperatur, etc., ab. Die inneren Vorgänge können aber auch durch äußere Einflüsse, wie z.B. Elektromagnetische Felder, etc., beeinflusst werden. Können - unter Durchführung bestimmter, spezifisch ausgelegter Prozesse, wie z.B. Lade- und Entladevorgänge - die Zeitverläufe der räumlichen Verteilung dieser Größen ermittelt werden, so werden dadurch grundlegende Kenntnisse über die Vorgänge im Inneren des Akkumulators bei den bestimmten Prozessen beschrieben.

Die erfindungsgemäße Bestimmung der Zeitabläufe der räumlichen Verteilung einer elektrischen, elektrochemischen, chemischen oder physikalischen Größen im Energiespeicher, wie z.B. ein Blei - Säure Akkumulator, kann über eine bestimmte Anordnung und Vorgangsweise der Messung des Zeitverlaufs der Dichte des Elektrolyten sowie über eine Methode zum Rückschluss daraus auf die räumliche Ausbildung der Verteilung der elektrischen, elektro-chemischen, chemischen oder physikalischen Größe erfolgen.

Besonders einfach gestaltet sich das Verfahren bei Energiespeichern mit flüssigem Elektrolyt, welches in Folge als vorteilhaftes Ausführungsbeispiel an einem handelsüblichen Blei - Säure Akkumulator beschrieben wird. Das Bestimmungsverfahren setzt sich aus folgenden Teilprozessen zusammen:
1) Wahl einer lokalen Anordnung und ausreichend feinen Stufung von Messpunkten zur Abbildung der räumlichen Verhältnisse im Inneren des Akkumulators in x, y und z - Richtung.
2) Wahl spezifischer und charakteristischer Betriebsabläufe, welche sich vornehmlich aus Lade- bzw. Entladeprozessen mit unterschiedlichen Parametern zusammensetzen.
3) Messtechnische Erfassung des zeitlichen Verlaufs der Elektrolytdichte, oder einer entsprechenden Ersatzgröße, an den gewählten Messpunkten und unter den unter Punkt 2) definierten Betriebsabläufen.
4) Erstellung einer dreidimensionalen, räumlichen Wertematrix, welche die gewonnenen Messergebnisse in ihrer zeitlichen Abfolge abbildet.
5) Analyse der räumlichen und zeitlichen Verteilung hinsichtlich des gesuchten ablaufenden zeitlichen Vorganges.

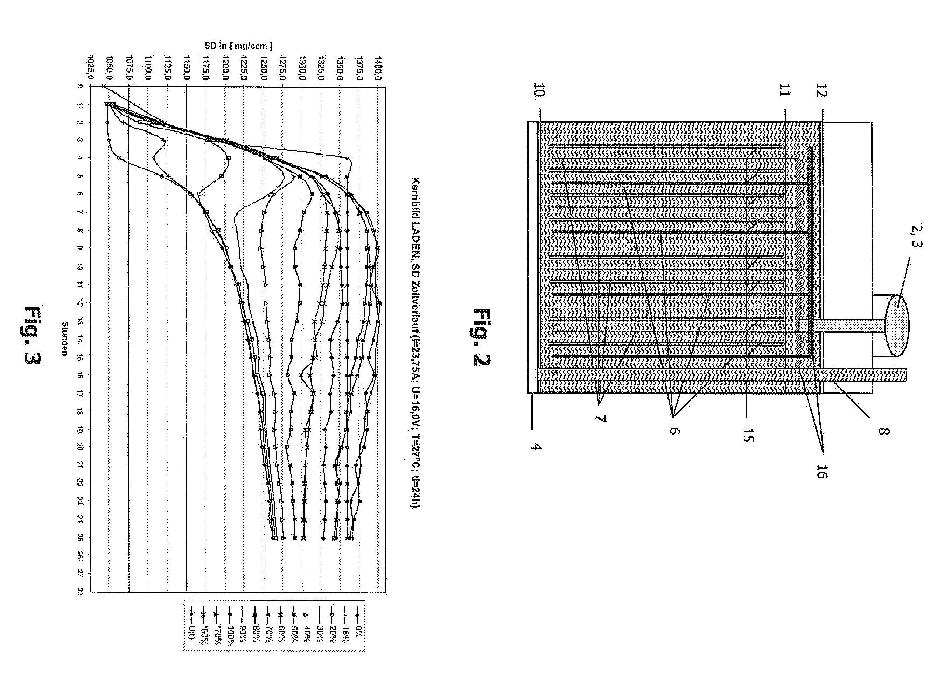

Diese Analyse kann dabei auf unterschiedliche Art und Weise geschehen. Z.B. können die Messergebnisse in betriebsablauftypischen Schaubildern, welche in Folge auch als "Kernbilder" bezeichnet werden, zusammengefasst und kategorisch zugeordnet werden, wie beispielhaft in Fig. 3 gezeigt. Fig. 3 zeigt ein Kernbild für den Betriebsablauf "Laden" unter bestimmten Umgebungsbedingungen und Parametern (hier z.B. Ladestrom I, Ladespannung U, Umgebungstemperatur T, Ladezeit tl). Dem hier dargestellten Kernbild ist die inhomogene Verteilung der Messgröße (Elektrolytdichte SD) klar zu entnehmen. Die Elektrolytdichte in verschiedenen Schichten (hier in 10%-Abstufung), dargestellt durch die verschiedenen Kurven, ist sowohl räumlich als auch zeitlich stark unterschiedlich.

Solche Kernbilder lassen sich mit dem erfindungsgemäßen Verfahren nun sehr einfach für beliebige Betriebsabläufe bzw. Kombinationen von verschiedenen Betriebsabläufen erstellen.

Die derart erstellten Kernbilder lassen sich dann entsprechend interpretieren und lassen Rückschlüsse auf die innere Verteilung der gesuchten Kenngröße zu. Diese Interpretation kann dabei unter Berücksichtigung bekannter grundlegender physikalischer Verhaltenseigenschaften der Batterie, wie z.B. elektrische, chemische, elektrochemische Verhaltenseigenschaften, erfolgen. D.h. man kann anhand der zeitlichen und räumlichen Verteilung der Elektrolytdichte z.B. auf die Spannungsverteilung im Inneren der Batterie rückschließen, was es z.B. erlaubt, den Akkumulator hinsichtlich seines konstruktiven Aufbaus zu analysieren und zu verbessern.

Man kann aber unter Berücksichtigung der bekannten grundlegenden physikalischen Verhaltenseigenschaften der Batterie, wie z.B. elektrische, chemische, elektrochemische Verhaltenseigenschaften auch einen funktionalen Zusammenhang zwischen der gemessenen Elektrolytdichte und einer bestimmten Kenngröße des Energiespeichers herstellen. Damit könnte man z.B. die Elektrolytdichteverteilung direkt in eine Verteilung einer Kenngröße umrechnen, was die Analyse der Messergebnisse vereinfachen kann.

Wird das Verfahren bei einem Energiespeicher angewandt, der im normalen Betrieb läuft, kann man durch die Analyse eines mit dem erfindungsgemäßen Verfahren aufgenommenen Schaubildes auch auf den Betriebszustand des Energiespeichers zurückschließen. Das erfindungsgemäße Verfahren ist folglich insbesondere auch im normalen Betrieb eines Energiespeichers einsetzbar.

Als Ersatzgröße für die Elektrolytdichte kommen eine Reihe von Größen in Frage, die mit der Elektrolytdichte korrelieren, wie z.B. der Schwefelsäureanteil der Luft im Akkumulator oder die Potentialverteilung im Akkumulator.

Ebenfalls kann eine Abschätzung möglicher Stör- und Einflussfaktoren auf die Messung gemacht werden und die Messwerte entsprechend korrigiert werden.

Die Messpunkte müssen aber nicht zwingend dreidimensional verteilt sein, allerdings sollten die Messpunkte vorteilhaft so gewählt werden, dass relevante und aussagetypische Messungen möglich sind. Im einfachsten Fall reicht eine eindimensionale Verteilung der Messpunkte aus, wobei die Elektrolytdichte aber in einer Reihe übereinander liegenden Elektrolytschichten, hier also in z-Richtung verteilt, gemessen wird. Eine einzelne Messung, z.B. entweder ganz oben oder ganz unten, würde für das Verfahren nicht ausreichen, da dann kein Rückschluss auf mögliche Inhomogenitäten der Kenngröße im Inneren des Energiespeichers möglich ist. Vorteilhaft ist eine Verteilung der Messpunkte in z-Richtung in 25% bevorzugt 20%-Abstufungen über die Höhe des Elektrolytstandes im Energiespeicher. Eine feinere Verteilung, z.B. in 5% oder 10%-Abstufungen, ist aber natürlich ebenfalls möglich. Ebenso können die Messpunkte zweidimensional oder dreidimensional verteil sein, wie weiter unter genauer beschrieben. Die Messung erfolgt z.B. durch bekannte Flüssigkeitsdensitometer.

Ein konkretes Verfahren könnte daher wie nachfolgend anhand eines Blei - Säure Akkumulators mit flüssigem Elektrolyt (Säure) beschrieben ablaufen:
1) Wahl der Anordnung und Stufung der Messpunkte, z.B. in regelmäßigen Abständen über die Breite des Akkumulators verteilt und in 20%-Abstufung in z-Richtung.
2) Definition eines Betriebablaufs, welcher beispielsweise an einer fabriksneuen Blei - Säure Starterbatterie angewendet wird, bestehend aus Lade- und Entladezyklen, wobei die Ladezyklen nach einer loU Kennlinie und die Entladezyklen mit 120 (Entladung mit 20stündigem Strom) bis zu einer definierten Entladeendspannung der Batterie mit festgelegter Zyklenzahl durchgeführt wird. Definition der Umgebungsbedingungen (z.B. Umgebungstemperatur) sowie allfälliger Einflussfaktoren (z.B. mechanische Bewegung des Akkumulators).
3) Abschätzung der messtechnischen Werterelevanz der Messpunkte in der x / y - Ebene, unter Berücksichtigung spezieller Ausführungsformen (z.B. Taschung der Elektroden) des Akkumulators. D.h. die gemessen Messwerte in zweidimensionaler können unter Umständen dreidimensional umgelegt werden.
4) Durchführung der Messung und Wahl der zeitlichen Auflösung der Einzelmessungen, z.B. im Abstand von einer Stunde.
5) Erstellung der graphischen Schaubilder ("Kernbilder") der erfassten Prozesse.
6) Kategorisierung in "Kernbilder" gemäß dem Betriebsablauf.
7) Interpretation und Bewertung der erzielten Ergebnisse.

Unter Verwendung dieses Verfahrens können somit elektrochemische Energiespeicher mit sich verbrauchendem Elektrolyten unterschiedlicher Art, Größe und Type, z.B. Blei-Säure-Akkumulatoren, Ni-Cd-Batterien, etc., hinsichtlich der Einflussnahme elektrischer, elektrochemischer, chemischer und mechanischer Faktoren und Faktorvariationen, welche auch dynamisch und in gegenseitiger Wechselwirkung auf die Batterie wirken können, genau hinsichtlich der Zeitverläufe der Verteilung charakteristischer Kenngrößen im Inneren analysiert werden. Dabei sollten die Betriebsabläufe so gewählt werden, dass der gemessene Summeneffekt (Überlappung einzelner ablaufender Teilbetriebsabläufe - z.B. Säurefreisetzung durch Ladung und Ausgleich durch Diffusion) charakteristisch ist und durch die Auswahl der spezifisch auszulegenden Betriebsabläufe die Möglichkeit zur Trennung der auftretenden Effekte hergestellt wird. Dabei sollen sich anhand der auszuwählenden und zu definierenden Betriebsabläufe in Folge typische zeitliche Grundcharakteristika ("Kernbilder") ergeben, deren Auswertung und Interpretation die Bestimmung der im Inneren der Batterien ablaufenden zeitlichen Vorgänge ermöglicht.

Zur Untersuchung können auch Hilfsprozesse zum Einsatz kommen, die entweder über die Pole auf den Energiespeicher eingeprägt werden, oder von außen (z.B. über zusätzliche elektromagnetische Feldelektroden, oder Vorrichtungen zur mechanischen Bewegung des Energiespeichers) auf den Energiespeicher einwirken können.

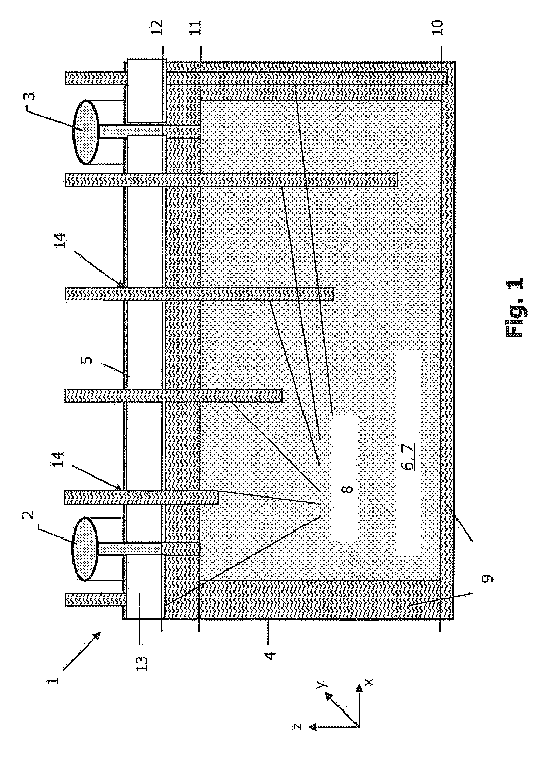

Anhand der Figs. 1 und 2 wird nun anhand eines Blei-Säure-Akkumulators 1 eine erfindungsgemäße Anordnung zur Durchführung des Verfahrens beschrieben.

Der Blei-Säure-Akkumulators 1 umfasst, wie hinlänglich bekannt, einen Batteriekasten 4, in dem eine Reihe von durch Separatoren 15 getrennten elektrischen Zellen angeordnet sind, die parallele zwischen die beiden Pole 2, 3 des Akkumulators geschaltete sind. Jede Zelle besteht aus einer positiven und negativen Zellplatte 6, 7, die entsprechend ihrer Polariät über Zellverbinder 16 elektrisch entweder mit dem positiven 3 oder negativen Pol 2 verbunden sind. Der Batteriekasten 4 ist mit einem Elektrolyten 9 (hier Säure) gefüllt, der die Zellplatten 6, 7 umgibt. Der Aufbau eines solchen Blei-Säure-Akkumulators 1 ist hinlänglich bekannt, weshalb hier nicht weiter darauf eingegangen wird.

In diesem Ausführungsbeispiel sind durch den Batteriedeckel 5 über Öffnungen 14 eine Reihe von Messröhrchen 8 in das Innere des Blei-Säure-Akkumulators 1 geführt. Die Messröhrchen 8 sind dabei über die Breite des Blei-Säure-Akkumulators 1 (hier die x-Richtung) verteilt angeordnet und reichen in unterschiedliche Tiefen (hier die z-Richtung) des Blei-Säure-Akkumulators 1, hier in einer 20%-igen Abstufung. In Längsrichtung des Blei-Säure-Akkumulators 1 (hier die y-Richtung) sind die Messröhrchen 8 in diesem Beispiel am äußeren Rand des Batteriekastens 4 angeordnet, da somit nicht in die Zellen eingegriffen wird. Durch diese Messröhrchen 8 kann daher auf verschiedene Elektrolytschichten zugegriffen werden, wobei es unerheblich ist, ob eine Messeinrichtung durch die Messröhrchen 8 eingeführt wird, oder ob über die Messröhrchen zur Messung Elektrolyt entnommen wird. Daraus ergeben sich folglich sechs zweidimensional verteilte Messpunkte zur Messung der Elektrolytdichte.

Selbstverständlich ist aber auch möglich, die Messung der übereinander liegenden Elektrolytschichten an den unterschiedlichen Stellen mit nur einem Messröhrchen 8 durchzuführen, z.B. indem das Messröhrchen 8 für jede Messung in die entsprechende Tiefe (z-Richtung) bewegt wird. Auch ist es denkbar an nur einer Stelle am Blei-Säure-Akkumulator 1 in unterschiedlichen Tiefen zu messen, also eindimensional zu messen.

Auch ist es denkbar, die Messröhrchen 8 nicht nur zweidimensional anzuordnen (wie in Fig. 1 und 2), sondern die Messröhrchen 8 auch über die Länge des Blei-Säure-Akkumulators 1 (hier die y-Richtung) zu verteilen, womit die Messung dreidimensional durchgeführt werden kann.

Falls die Elektrolytdichte mit einer Messeinrichtung direkt im Blei-Säure-Akkumulator 1 gemessen wird, kann auf eigene Messröhrchen 8 auch verzichtet werden, wobei für die Verteilung der Messpunkte das oben gesagte natürlich ebenso gilt.

Der Batteriedeckel 5 kann nach der Messung einfach ausgetauscht werden oder es können die für die Messröhrchen 8 benötigten Öffnungen einfach verschlossen werden, wodurch eine zerstörungsfreie Messung möglich ist.

Die Messröhrchen 8 oder eine Messeinrichtung kann aber ebenso seitlich oder von unten durch den Batteriekasten 4 eingeführt werden.

Vorteilhaft wird durch die Messung der gesamte Elektrolytstand 12 abgedeckt und die Messungen reichen bevorzugt von der Zelleunterkante 10 (oder darunter) bis zur Zellenoberkante 11 (oder darüber bis zur Höhe des Elektrolytstandes 12). Im eventuell zwischen Elektrolytstand 12 und Batteriedeckel 5 entstehenden Luftraum 13 wird nicht gemessen.

## Patentansprüche

1. Verfahren zur zerstörungsfreien Bestimmung eines im Inneren eines elektro-chemischen Energiespeichers (1) mit sich verbrauchendem Elektrolyten (9) ablaufenden zeitlichen Vorganges, **dadurch gekennzeichnet, dass** an zumindest einer Stelle des Energiespeichers (1) über einen bestimmten Zeitraum die Elektrolytdichte oder eine mit der Elektrolytdichte korrelierende Messgröße in einer Reihe von übereinander liegenden Elektrolytschichten unter einem bestimmten Betriebsablauf des Energiespeichers (1) gemessen wird, die zeitliche und räumliche Verteilung der Messwerte aufgezeichnet wird und diese Verteilung hinsichtlich des ablaufenden zeitlichen Vorganges analysiert wird.

2. Verfahren nach Anspruch 1, **dadurch gekennzeichnet, dass** die Messung der Elektrolytdichte oder einer entsprechenden Ersatzgröße in einer Reihe von übereinander liegenden Elektrolytschichten an mehreren Stellen des Energiespeichers (1) durchgeführt werden.

3. Verfahren nach Anspruch 1 oder 2, **dadurch gekennzeichnet, dass** aus der zeitlichen und räumlichen Verteilung der Messwerte unter Berücksichtigung grundlegender physikalischer Verhaltenseigenschaften des Energiespeichers (1), wie z.B. elektrische, chemische, elektrochemische Verhaltenseigenschaften, ein Zusammenhang zwischen der gemessenen Elektrolytdichte und einer Kenngröße des Energiespeichers (1) abgeleitet wird.

4. Verfahren nach einem der Ansprüche 1 bis 3, **dadurch gekennzeichnet, dass** durch die Auswahl spezieller Betriebsabläufe zumindest ein grundtypisches Schaubild der zeitlichen inneren Abläufe generiert wird, indem die Messgrößen oder davon abgeleitete Kenngrößen über der Zeit aufgetragen werden.

5. Verfahren nach Anspruch 4, **dadurch gekennzeichnet, dass** das Schaubild hinsichtlich des Verhaltens der elektrochemischen Größen des Energiespeichers (1) interpretiert wird.

6. Verfahren nach einem der Ansprüche 1 bis 5, **dadurch gekennzeichnet, dass** der Energiespeicher (1) vor oder während der Messung einem von Innen oder von Außen wirkenden Einflussfaktor, vorzugsweise Ladevorgänge, Entladevorgänge, thermische Konditionierungen, mechanische Bewegungen, elektromagnetische Felder, ausgesetzt wird.

7. Verfahren nach Anspruch 6, **dadurch gekennzeichnet, dass** der Energiespeicher (1) unterschiedlichen Einflussfaktoren in beliebiger Abfolge oder gleichzeitig in Kombination ausgesetzt wird.

8. Vorrichtung zur zerstörungsfreien Bestimmung eines im Inneren eines elektro-chemischen Energiespeichers (1) mit sich verbrauchendem Elektrolyten (9) ablaufenden zeitlichen Vorganges, **dadurch gekennzeichnet, dass** am Gehäuse (4) des Energiespeichers (1) mehrere Öffnungen (14) verteilt angeordnet sind und durch jede dieser Öffnungen (14) eine in den Elektrolyten (9) reichende Messeinrichtung gesteckt ist, wobei die Messeinrichtungen zumindest teilweise in unterschiedliche Tiefen des Elektrolytstandes reichen, und durch die Messeinrichtungen die Elektrolytdichten oder eine mit der Elektrolytdichte korrelierende Messgröße über einen bestimmten Zeitraum in einer Reihe von übereinander liegenden Elektrolytschichten unter einem bestimmten Betriebsablauf des Energiespeichers (1) messbar sind und die räumliche und zeitliche Verteilung der Messwerte in einer Aufzeichnungseinheit aufzeichenbar ist.

9. Vorrichtung nach Anspruch 8, **dadurch gekennzeichnet, dass** durch jede Öffnung (14) ein Messröhrchen (8) gesteckt ist, wobei die Messröhrchen (8) zumindest teilweise in unterschiedliche Tiefen des Elektrolytstandes reichen und die Messeinrichtungen durch die Messröhrchen (8) einführbar sind.

10. Vorrichtung nach Anspruch 8, **dadurch gekennzeichnet, dass** durch jede Öffnung (14) ein Messröhrchen (8) gesteckt ist, wobei die Messröhrchen (8) zumindest teilweise in unterschiedliche Tiefen des Elektrolytstandes reichen und durch die Messröhrchen (8) Elektrolyt entnehmbar ist.

11. Vorrichtung nach einem der Ansprüche 8 bis 10, **dadurch gekennzeichnet, dass** eine Einrichtung vorgesehen ist, mit der der Energiespeicher (1) von Innen oder von Außen wirkenden Einflussfaktoren, vorzugsweise Ladevorgänge, Entladevorgänge, thermische Konditionierungen, mechanische Bewegungen, elektromagnetische Felder, aussetzbar ist.
